# EUROPEAN PATENT APPLICATION

(11) **EP 4 826 657 A1**
(43) Date of publication of application: **21.10.2026**
(21) Application number: 26172089.0
(22) Date of filing: 14.04.2026
(51) Int. Cl.: G06T 7/80, G06V 20/56

(54) **CALIBRATION METHOD AND APPARATUS FOR CAMERA**

(30) Priority: 15.04.2025 KR 20250048965
(71) Applicant: Hyundai Motor Company, Seoul 06797 (KR); Kia Corporation, Seoul 06797 (KR)
(72) Inventor: LEE, Jung Hyun, 18280 Hwaseong-si, Gyeonggi-do (KR); KIM, Chan Soo, 18280 Hwaseong-si, Gyeonggi-do (KR)
(74) Representative: Hoffmann Eitle

(57) **Abstract**

Disclosed herein a calibration method and apparatus for camera. The method includes: generating first optical flow data between time-series image data according to the movement of the camera; extracting ground optical flow data located on the ground estimated from second optical flow data mapped to the three-dimensional space based on the first optical flow data; and estimating pose information of the camera that minimizes a view error in the plurality of ground optical flow data aligned to a view having a predetermined perspective based on the image data.

## Description

### CROSS-REFERENCE TO RELATED APPLICATION

This application claims the benefit of priority to Korean Patent Application No. 10-2025-0048965, filed in the Korean Intellectual Property Office on April 15, 2025, the disclosure of which is incorporated herein by reference in its entirety.

### TECHNICAL FIELD

The present disclosure relates to a calibration method and apparatus of a camera, and to a calibration method and apparatus of a camera that calibrates the camera depending on the ground without a reference target and estimates all the pose elements of the camera without involving a large amount of data.

### BACKGROUND

The matters described in this Background section are only for enhancement of understanding of the background of the disclosure, and should not be taken as acknowledgment that they correspond to prior art already known to those skilled in the art.

Autonomous driving functions are being developed so that a vehicle may control its own driving while reducing or completely excluding the intervention of a driver, and technologies supporting this are gradually being applied to a vehicle.

To implement autonomous driving, the vehicle collects surrounding environment information through various sensors. Based on data acquired from these sensors, the vehicle may perceive the surrounding environment and utilize the perceived information to identify the situation around the vehicle. A control plan for autonomous driving is established according to the identified situation, through which autonomous driving may be executed by controlling a driving device of the vehicle.

Autonomous driving utilizes camera sensors for the vehicle to accurately recognize the surrounding environment. Camera calibration may be processed to correct lens distortion and for accurate pose estimation. Calibration may also be utilized to estimate poses and map between spaces having different dimensions from each other.

By detecting vanishing points in the calibration process, the pitch and yaw are estimated, and the roll may be grasped through the horizon slope. The Focus of Expansion (FoE) in the pure longitudinal motion is a vanishing point but may not be orthogonal because it is not estimated with the roll. This may increase uncertainty. Horizon detection in a real road environment may only be effective when the Manhattan World assumption is satisfied. Calibration primarily utilizes features in the Manhattan World environment to detect horizons and accumulate vanishing point coordinates to identify vanishing lines, but uncertainties may still exist. The vanishing point moves during the vehicle curve, and the correlation between pitch, yaw, and roll is not sufficiently considered, so that the pose estimation accuracy may be degraded.

### SUMMARY

Various examples of the present disclosure are to provide a calibration method and apparatus of a camera that calibrates the camera based on the ground without a reference target and estimates all the pose elements of the camera without involving a large amount of data.

The various examples to be achieved in the present disclosure are not limited to the above-mentioned technical problems, and other technical problems not mentioned will be clearly understood by a person skilled in the art from the following description.

According to the present disclosure, a method performed by a vehicle may comprise generating, via a sensor of the vehicle, time-series image data associated with a surrounding environment of the vehicle, obtaining, via the sensor and based on movement of the sensor, first optical flow data between adjacent image frames of the time-series image data, mapping the first optical flow data into a three-dimensional space to generate second optical flow data, extracting, from the second optical flow data, ground optical flow data associated with keypoints located on a ground plane, aligning, based on the time-series image data, the ground optical flow data to a view having a predetermined perspective, determining a view error in the aligned ground optical flow data, determining pose parameters associated with the sensor that, when applied, reduce the view error, outputting a signal indicating the pose parameters, and adjusting, based on the signal, the sensor.

The method may further specify that the first optical flow data, the second optical flow data, and the ground optical flow data have a format of an optical flow vector. The method may further specify that obtaining the first optical flow data may comprise extracting a first feature from the time-series image data, generating a descriptor describing an internal relationship between keypoints associated with the first feature and an external relationship of keypoints matched between adjacent image frames of the time-series image data, generating global coarse matching information based on the descriptor, extracting a second feature having a finer granularity than the first feature, performing precision matching between adjacent frames based on the global coarse matching information and the second feature, and generating the first optical flow data based on the precision matching. The descriptor may be generated by applying a transformer-based self-attention process to keypoints associated with the first feature to generate the internal relationship and applying a transformer-based cross-attention process to keypoints matched between adjacent image frames to generate the external relationship.

The first optical flow data may comprise position information of keypoints in each image frame and matching-pair information indicating correspondences between keypoints of the adjacent image frames. The first optical flow data may further comprise position information of keypoints in each image frame and matching-pair information indicating correspondences between keypoints of the adjacent image frames, and the second optical flow data may be generated based on the matching-pair information and positions obtained by mapping the keypoints of the time-series image data into the three-dimensional space.

According to the present disclosure, a vehicle may comprise a sensor configured to generate time-series image data associated with a surrounding environment of the vehicle and a processor circuit configured to cause the vehicle to obtain, based on movement of the sensor, first optical flow data between adjacent image frames of the time-series image data, map keypoints associated with the first optical flow data into a three-dimensional space to generate a plurality of pieces of second optical flow data, form a cluster comprising at least two pieces of the plurality of pieces of second optical flow data having respective normal vectors satisfying a clustering condition based on angular differences between the normal vectors, the cluster corresponding to a candidate plane, identify the candidate plane as a ground plane based on motion information of the vehicle, obtain a plurality of ground optical-flow vectors associated with keypoints located on the ground plane, transform the plurality of ground optical-flow vectors into a view of a predetermined viewpoint, determine a view error in the transformed plurality of ground optical-flow vectors based on at least one of a magnitude difference and an angle difference, determine pose parameters that reduce the view error and that indicate at least one of yaw, pitch, and roll of the sensor, output a signal indicating the pose parameters, and adjust the sensor based on the signal. The processor circuit may further determine whether at least two pieces of the second optical flow data satisfy the clustering condition based on angular differences between respective normal vectors. The processor circuit may further generate the plurality of ground optical flow vectors by selecting, from the plurality of pieces of second optical-flow data, pieces associated with keypoints located on the ground plane. The processor circuit may further determine the pose parameters by reducing the view error so that the transformed plurality of ground optical-flow vectors have uniform magnitudes and parallel directions.

According to the present disclosure, an apparatus of a vehicle may comprise a sensor configured to generate time-series image data associated with a surrounding environment of the vehicle, a processor, and a memory storing at least one instruction that, when executed by the processor, is configured to cause the apparatus to obtain, via the sensor and based on movement of the sensor, first optical flow data between adjacent image frames of the time-series image data, map the first optical flow data into a three-dimensional space to generate second optical flow data, extract, from the second optical flow data, ground optical flow data associated with keypoints located on a ground plane, align, based on the time-series image data, the ground optical flow data to a view having a predetermined perspective, determine a view error in the aligned ground optical flow data, determine pose parameters associated with the sensor that reduce the view error, output a signal indicating the pose parameters, and adjust the sensor based on the signal. The first, second, and ground optical flow data may have a format of an optical flow vector. The instructions may further cause the apparatus to extract a first feature from the time-series image data, generate a descriptor describing internal relationships between keypoints associated with the first feature and external relationships between matched keypoints of adjacent image frames, generate global coarse matching information based on the descriptor, extract a second feature having a finer granularity than the first feature, perform precision matching between adjacent image frames based on the global coarse matching information and the second feature, and generate the first optical flow data based on the precision matching. The descriptor may be generated by applying a transformer-based self-attention process to keypoints associated with the first feature and a transformer-based cross-attention process to keypoints matched between adjacent image frames. The first optical flow data may comprise position information of keypoints in each image frame and matching-pair information indicating correspondences between keypoints of adjacent image frames.

The first optical flow data may further comprise position information of keypoints in each image frame and matching-pair information indicating correspondences between keypoints of adjacent image frames, and the second optical flow data may be generated based on the matching-pair information and positions obtained by mapping the keypoints into the three-dimensional space.

The instructions may further cause the apparatus to determine a similarity between pieces of the second optical flow data, cluster at least two pieces satisfying a similarity condition to determine a candidate plane, identify the candidate plane as the ground plane based on a position of the sensor and motion information of the vehicle, and extract, as the ground optical flow data, pieces of the second optical flow data associated with keypoints located on the ground plane. The instructions may further cause the apparatus to determine whether the at least two pieces satisfy the similarity condition based on an angle between respective normal vectors.

The view error may be based on differences in magnitudes and differences in directions of ground optical flow vectors associated with the aligned ground optical flow data, and the instructions may further cause the apparatus to reduce the view error so that the ground optical flow vectors have uniform magnitudes and are parallel to each other. The pose parameters may indicate spatial translation and rotation of the sensor for transforming the ground optical flow data into the view having the predetermined perspective, and the predetermined perspective may include a bird's eye view.

The features briefly summarized above for this disclosure are only examples of the detailed description of the disclosure which follow and are not intended to limit the scope of the disclosure.

### BRIEF DESCRIPTION OF THE DRAWINGS

The above and other objects, features and advantages of the present disclosure will become more apparent to those of ordinary skill in the art by describing one or more example examples thereof in detail with reference to the accompanying drawings, in which:
FIG. 1 shows an example of modules that configures a calibration apparatus of a camera.
FIG. 2 shows an example of a calibration method of a camera.
FIG. 3 shows an example of a process of generating a first optical flow data.
FIG. 4 shows an example of generation of a descriptor in single image data.
FIG. 5 shows an example of generation of a descriptor in a plurality of time-series image data.
FIG. 6 shows an example of generation of ground optical flow data.
FIG. 7 shows an example of estimation of the same plane.
FIG. 8 shows an example of ground optical flow data in a bird's-eye view image.
FIG. 9 shows an example of that a vehicle communicates with another device to transmit and receive data.
FIG. 10 shows an example of modules that configure the vehicle.
FIG. 11 shows an example computing system.

### DETAILED DESCRIPTION

Hereinafter, examples of the present disclosure will be described in detail with reference to the accompanying drawings so that those skilled in the art may easily implement the present disclosure. However, the present disclosure may be implemented in various ways and is not limited to the examples described therein.

In describing examples of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

In the present disclosure, when an element is simply referred to as being "connected to", "coupled to" or "linked to" another element, this may mean that an element is "directly connected to", "directly coupled to" or "directly linked to" another element or is connected to, coupled to or linked to another element with the other element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically mentioned. Accordingly, a first element in an example could be termed a second element in another example, and, similarly, a second element in an example could be termed a first element in another example, without departing from the scope of the present disclosure.

In the present disclosure, elements that are distinguished from each other are for clearly describing each feature, and do not necessarily mean that the elements are separated. That is, a plurality of elements may be integrated in one hardware or software unit, or one element may be distributed and formed in a plurality of hardware or software units. Therefore, even if not mentioned otherwise, such integrated or distributed examples are included in the scope of the present disclosure.

In the present disclosure, elements described in various examples do not necessarily mean essential elements, and some of them may be optional elements. Therefore, an example composed of a subset of elements described in an example is also included in the scope of the present disclosure. In addition, examples including other elements in addition to the elements described in the various examples are also included in the scope of the present disclosure.

The advantages and features of the present disclosure and the way of attaining them will become apparent with reference to examples described below in detail in conjunction with the accompanying drawings. Examples, however, may be embodied in many different forms and should not be constructed as being limited to example examples set forth herein. Rather, these examples are provided so that this disclosure will be complete and will fully convey the scope of the disclosure to those skilled in the art.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all combinations of the listed items. For example, "at least one of A or B" may refer to (1) at least one A; (2) at least one B; or (3) at least one A and at least one B.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium to be executed on a computer. The medium may either continuously store a computer-executable program or temporarily store the program for execution or download. Furthermore, the medium may be a variety of recording or storage means in the form of a single hardware device or multiple combined hardware devices and is not limited to media directly connected to some computer system but may also be distributed across a network. Examples of such media include magnetic media such as a hard disk, a floppy disk, or a magnetic tape, optical recording media such as a CD-ROM or a DVD, magnetooptical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be controlled based on the feature of ground-driven sensor self-calibration. For example, when the calibration apparatus updates pose parameters that reduce view error in ground optical-flow data, the vehicle may adapt autonomous driving behaviors (e.g., lane-keeping control, adaptive-cruise following distance, or collision-warning timing). Using the updated calibration, the processor may refine perception outputs and adjust downstream controls (e.g., braking control, acceleration control, steering correction, or sensor-fusion weighting) to maintain accurate vehicle operation.

One or more auxiliary devices may also be controlled based on the feature of ground-driven sensor self-calibration. For example, when updated pose parameters improve ground-based optical-flow alignment, the vehicle may adjust auxiliary braking functions (e.g., an engine brake, exhaust brake, hydraulic retarder, electric retarder, or regenerative brake) to maintain smooth deceleration, stabilize body motion on slopes, or correct braking force distribution during autonomous maneuvers.

One or more communication devices (e.g., a modem, network adapter, radio transceiver, or antenna supporting Ethernet, Wi-Fi, NFC, Bluetooth, LTE, 5G NR, or V2X) may also be controlled based on the feature of ground-driven sensor self-calibration. For example, when updated pose parameters improve calibration quality, the vehicle may trigger prioritized V2X uplink of calibration status, request updated perception maps from a server, or adjust bandwidth allocation to transmit refined ground-based optical-flow data for cooperative perception.

Minimum risk maneuver (MRM) operation(s) may also be controlled based on the feature of ground-driven sensor self-calibration. For example, when ground-derived pose updates indicate degraded calibration (e.g., inconsistent ground optical-flow alignment), the vehicle may trigger an MRM by reducing speed, tightening lane-centering, or safely pulling over until calibration stabilizes. During the MRM, one or more processors may continue applying updated ground-based pose estimates to maintain a minimized-risk state while executing controlled braking or lateral stabilization maneuvers.

Biased driving operation(s) may also be controlled based on the feature of ground-driven sensor self-calibration. For example, when ground-derived pose updates indicate a slight camera pitch or roll bias, the driving control apparatus may adjust the biased target lateral distance to compensate-such as shifting the vehicle slightly left or right within the lane to maintain safer clearance from road edges or adjacent vehicles. During maneuvers (e.g., lane changes or merges), the apparatus may use the updated calibration to select a biased lateral offset that preserves stability on uneven pavement, avoids roadside obstacles, or increases buffer space from nearby traffic. One or more sensors (e.g., IMU sensors, cameras, LiDAR, RADAR, blind-spot sensors, or parking sensors, etc.) may also be controlled based on the feature of ground-driven sensor self-calibration. For example, when ground-derived pose updates indicate a shift in camera pitch or roll, the system may adjust camera exposure or region-of-interest settings to maintain stable perception, recalibrate IMU drift using ground-aligned motion cues, or update LiDAR/RADAR fusion weights to reflect improved pose accuracy. These calibration-driven adjustments may help maintain accurate detection and support downstream autonomous-driving controls (e.g., lane-keeping, collision avoidance, or adaptive cruise).An autonomous driving level and/or autonomous driving activation or deactivation may also be controlled based on the feature of ground-driven sensor self-calibration. For example, when ground-derived pose updates detect degraded calibration quality (e.g., increased view-error or unstable ground optical-flow alignment), the system may automatically downgrade the autonomous-driving level, increase driver-attention requirements (e.g., more frequent hands-on-wheel or gaze confirmations), or deactivate autonomous driving until calibration stabilizes. Conversely, when calibration confidence improves, the system may restore higher autonomous-driving levels or re-enable hands-free features (e.g., display unlock of certain driver-assistance visualizations).In the present disclosure, expressions of location relations used in the present specification such as "upper", "lower", "left" and "right" are employed for the convenience of explanation, and in case drawings illustrated in the present specification are inversed, the location relations described in the specification may be inversely understood.

According to the present disclosure, a sensor (e.g., camera) mounted on a vehicle may be automatically calibrated by using only the images captured while the vehicle is driving, without requiring any special calibration targets or large datasets. As the vehicle moves, the sensor acquires a sequence of images, and the vehicle observes how small features on the road surface appear to shift from one image to the next. By analyzing these shifts, the vehicle identifies motion patterns that belong to a ground plane and maps them into a three-dimensional space. The sensor's pose (for example, its yaw, pitch, and roll angles) may then be adjusted so that, when the images are converted into a bird's-eye-view representation, features of the ground plane appear consistent in size and direction. When the pose is correct, ground motion vectors become uniform and parallel; if the pose is not correct, the vehicle detects distortion and makes further adjustments. Through this process, the vehicle may determine a proper alignment needed for accurate perception, allowing the vehicle to calibrate the sensor during ordinary driving.

Hereinafter, examples of the present disclosure will be described with reference to the accompanying drawings.

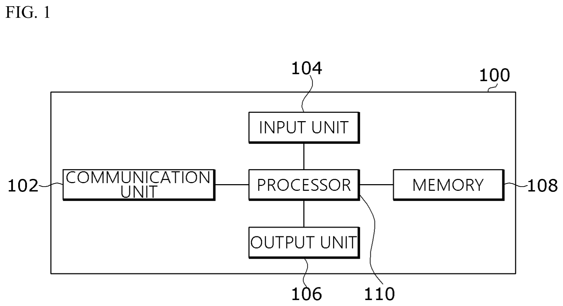

Hereinafter, a calibration apparatus for performing a calibration method of a camera according to an example of the present disclosure will be described with reference to FIG. 1. FIG. 1 shows an example of modules that configures a calibration apparatus of a camera according to an example of the present disclosure.

Referring to FIG. 1, a calibration apparatus 100 may provide a parameter of a camera, for example, a geometric parameter, by using continuous image data in which the camera detects the surrounding environment in a time-series manner while the apparatus equipped with the camera moves the actual environment. The geometric parameter may be pose information of the camera. The pose information may include parameters related to spatial translation and rotation that are applied when image data acquired from the camera is converted into a view having a predetermined viewpoint (e.g., a bird's-eye-view transformation, a top-down map layout, an occupancy-grid viewpoint, or a depth-augmented viewpoint, etc.). This parameter may be an external geometric parameter. The view of the predetermined perspective may be, for example, a view of a bird's eye view viewpoint. The view may have various viewpoints such as, but not limited to, a three-dimensional view, a view with depth information, a semantic-view projection, and the like (e.g., a side-view projection, an oblique-view projection, or a fused multi-camera view, etc.). The calibration apparatus 100 may correct distortion in a camera having a wide-angle lens type, a stereo type, or a panoramic type, or provide an internal geometric parameter based on a focal length, a principal point, or the like, to provide depth information (e.g., for depth-from-motion, stereo disparity estimation, or 3D reconstruction, etc.).

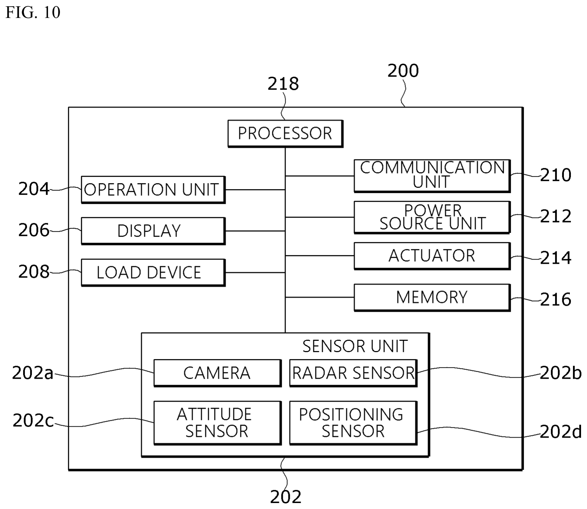

For example, the calibration apparatus 100 may receive time-series image data of the camera transmitted from an external device on which the camera is mounted while moving in an actual environment and generate a parameter of the camera. The calibration apparatus 100 may transmit the parameters of the camera to the camera or a vehicle 200 that mounts the camera. As another example, the calibration apparatus 100 may be a sensor correction device that mounts a camera while moving in an actual environment. The calibration apparatus 100 may generate a parameter of the camera based on image data acquired in time series of the surrounding environment while moving. The calibration apparatus 100 may transmit the parameter to a camera or the vehicle 200 that mounts the camera. As another example, the calibration apparatus 100 may be configured in the vehicle 200 that uses the image data acquired from the camera for driving control. When the vehicle 200 updates the parameters of the camera while driving, the calibration apparatus 100 may output the parameters based on the image data acquired while driving, and update the parameters of the camera (e.g., pose drift correction, rolling-shutter compensation, or temporal recalibration under vibration, etc.). In the present disclosure, for convenience of description, the calibration apparatus 100 in FIG. 1 is described as an example of receiving time-series image data of a camera transmitted from an external device but may be applied to another example of a sensor correction device. Another example, that is, the vehicle 200 provided with the calibration apparatus 100 is illustrated in FIG. 10 and will be described later.

On the other hand, a vehicle 200 that receives a parameter of the camera, such as pose information, from the calibration apparatus 100 may refer to a movable device. The vehicle 200 is a ground vehicle driving on the ground, and may be a conventional passenger or commercial vehicle, a Purpose-Built Vehicle (PBV), or the like. The vehicle 200 may be a robot in a broad sense, such as a moving means, and the robot may be moved using wheels, tracks, or other moving modules (e.g., articulated legs, hybrid wheel-leg mechanisms, or omni-directional drive units, etc.). The vehicle 200 may be driven autonomously or passively.

The autonomous vehicle 200 may be implemented as semi-autonomous driving or fully autonomous driving. The fully autonomous driving may be provided as autonomous movement in which the vehicle 200 completely controls without user intervention, even if the driving situation is uncertain (e.g., in low-visibility conditions, heavy traffic, or complex intersections, etc.). The semi-autonomous driving may be provided in an autonomous movement in which driver intervention is required according to a specific driving situation (e.g., construction zones, adverse weather, or unstructured roads, etc.).

The pose information of the camera according to the present disclosure is not only applied to the vehicle 200 for ground driving, but may be applied to various transportation devices such as a flight mobility device, for example (e.g., a drone, an urban air mobility aircraft, or an unmanned aerial vehicle, etc.).

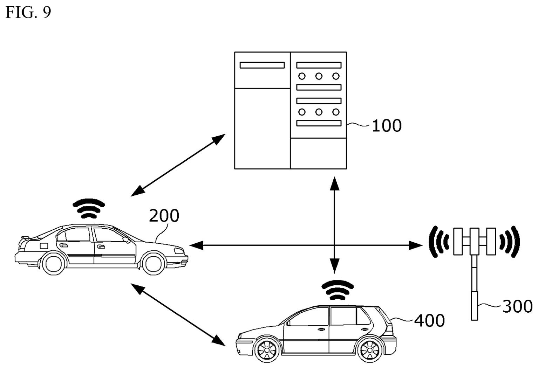

The calibration apparatus 100 may be, for example, an apparatus, e.g., a server, operated by a vehicle manufacturer or provided separately from the vehicle 200 to be operated by a management agency that services autonomous driving. The server (see 100 in FIG. 9) may not only provide information related to the calibration of the camera, but also transmit an application or a learning model for autonomous driving to the vehicle (e.g., an object-detection model, a lane-segmentation model, a sensor-fusion model, or a trajectory-prediction model, etc.). When the server 100 is operated by a vehicle manufacturer or a management agency that supports autonomous driving, connected data of the vehicle 200 may be received, or data necessary for autonomous driving may be transmitted (e.g., HD-map updates, cloud-based calibration data, or remote software modules, etc.). The server 100 may transmit various information and software modules used for control of the vehicle 200 to the vehicle 200 in response to requests and data transmitted from the vehicle 200 and a user device, to support autonomous driving of the vehicle 200 and various services (e.g., over-the-air updates, feature-activation packages, or remote diagnostics, etc.). In the present disclosure, the calibration function of the camera is described among various functions of the server.

The calibration apparatus 100 may include a communication unit 102, an input unit 104, an output unit 106, a memory 108, and a processor 110.

The communication unit 102 may support mutual communication with an external device, the vehicles 200 and 400, and the like. In the present disclosure, the communication unit 102 may be a communication interface that receives time-series image data of a camera received from an external device or the vehicles 200 and 400. The communication interface may transmit camera parameters, such as pose information, estimated using image data to the camera or vehicles 200, 400 (e.g., when pose drift occurs, when recalibration is required after vibration, or when the camera is replaced, etc.).

The input unit 104 may include an interface to receive a user's request, and the output unit 106 may include an interface that visually provides information generated in accordance with the present disclosure. The information may include, for example, parameters of the camera and intermediate data output during the generation of the parameters (e.g., intermediate feature maps, optical-flow visualization, or confidence indices, etc.).

The memory 108 may store a program and various data for controlling the calibration apparatus 100 and load the program or read and write the data at the request of the processor 110.

In the present disclosure, the memory 108 may hold a plurality of image data consecutive in time series, a model for generating optical flow data based on the plurality of image data, and a software module for estimating pose information of the camera. The model for generating the optical flow data may be, for example, a learning model (e.g., a CNN-based model, a transformer-based model, or an encoder-decoder optical-flow network, etc.), which will be described in detail later. The software module may be configured to estimate pose information of the camera that minimizes a view error in the plurality of ground optical flow data aligned to a view having a predetermined viewpoint based on the image data (e.g., BEV alignment, ground-plane rectification, or multi-view geometric correction, etc.).

The processor 110 may perform overall control of the calibration apparatus 100. The processor 110 may be configured to execute applications and instructions stored in the memory 108. Specifically, the processor 110 may execute a process of generating first optical flow data between time-series image data according to the movement of the camera. The processor 110 may execute a process of extracting ground optical flow data located on the ground estimated from a second optical flow data mapped to the three-dimensional space based on the first optical flow data (e.g., using keypoint classification, plane-fitting logic, or direction-based filtering, etc.). In addition, the processor 110 may execute a process of estimating pose information of a camera that minimizes a view error in the plurality of ground optical flow data aligned to a view having a predetermined viewpoint based on image data.

The processor 110 may then transmit the camera's pose information to the camera or vehicles 200, 400. The vehicles 200, 400 may process image data of the camera based on the pose information and control the driving of the vehicle 200 based on the processed image data and other sensor data (e.g., LiDAR data, radar data, or ultrasonic measurements, etc.). A detailed description of the above-described processes by the processor 110 will be described later.

In the present disclosure, the processor 110 may be implemented as, for example, a single processing module. As another example, the processing according to the foregoing may be distributed processing in a plurality of processing modules, and the processor 110 may be collectively referred to as a plurality of the processing modules in this disclosure (e.g., a vision processor, a neural-network accelerator, or a motion-estimation module, etc.).

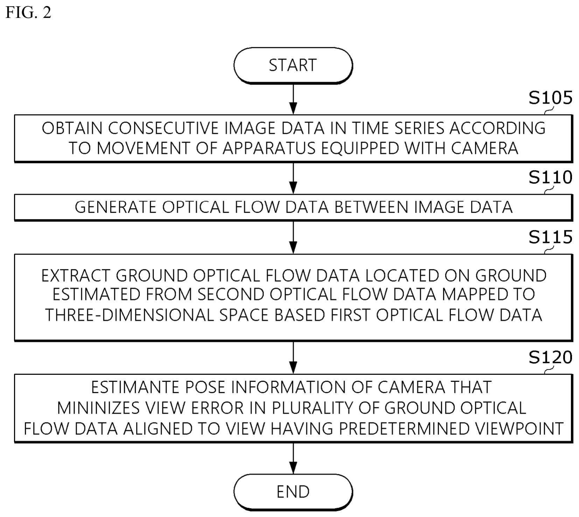

Hereinafter, a camera calibration method according to another example of the present disclosure will be described with reference to FIGS. 2 to 8. FIG. 2 shows an example of a calibration method of a camera. In the following, it may be described that the method is performed by the calibration apparatus 100 which generates the parameters of the camera based on time-series image data received from an external device moving while mounting the camera which photographs the surrounding environment. However, the following description may be applied to a sensor correction device or the vehicle 200 unless it is technically contradictory. The above method is performed by the processor 110 of the calibration apparatus 100, but the processor 110 may be abbreviated as the calibration apparatus 100 for convenience of description, or these terms may be used interchangeably.

Referring to S105 of FIG. 2, the processor 110 of the calibration apparatus 100 may acquire image data consecutive in time series according to movement of an external device on which the camera is mounted. In this disclosure, the image data may be referred to as an image frame in terms of time series (e.g., a video frame, a captured still image, or a compressed keyframe, etc.).

Referring to S110 of FIG. 2, the processor 110 may generate first optical flow data between consecutive image data in a time series. In the present disclosure, continuous image data is illustrated as time-series adjacent image frames but may be image frames of different times even if they are non-adjacent (e.g., frames skipped due to low frame rate, sensor delay, or computational decimation, etc.).

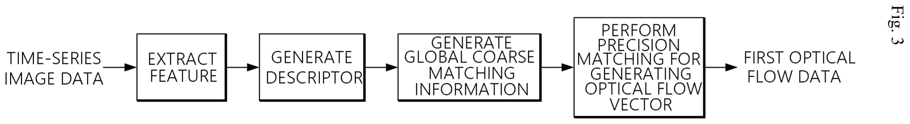

The generation of the first optical flow data will be described with reference to FIG. 3. FIG. 3 shows an example of a process of generating the first optical flow data.

The processor 110 may load a model that generates first optical flow data from the memory 108 to generate the data. The model may be, for example, a deep learning model as a learning model (e.g., a PWC-Net model, a RAFT model, or a FlowNet model, etc.).

The processor 110 may extract a first feature and a second feature from a plurality of time-series image data. The extraction of features may be, for example, an encoder of a Convolutional Neural Network (CNN). The encoder may include plurality of layers, and features may be extracted by applying a filter for each layer. The encoder may output a feature map from each image data via extraction of features. The second feature may have a level of precision relative to the first feature, e.g., a higher resolution or a higher level of data relative to the first feature (e.g., finer texture details, sharper edges, or denser feature points, etc.). The second feature may be generated, for example, by decoding for the first feature. As another example, the second feature may be output from an intermediate layer of the layers used for extraction of the first feature.

The processor 110 may generate a descriptor that describes an internal relationship between keypoints associated with a first feature of each image data and an external relationship of keypoints matched between a plurality of image data. The keypoint may be, for example, but not limited to, a part or a vertex of an edge included in a feature map of each image data (e.g., a corner, intersection, or blob-like point, etc.). The processor 110 may generate a descriptor, for example, by using a local feature matching model with a transformer (e.g., LoFTR, SuperGlue, or SparseFormer, etc.). The model may convert each of the first features into a one-dimensional vector and add location encoding to each of the one-dimensional vectors, to flatten a first feature (or a first feature map) of each image data. The model may input each of the position-encoded one-dimensional vectors into self-attention and cross-attention to generate descriptors having internal and external relationships. The descriptor may be output, for example, as a vector map (e.g., a descriptor grid or dense embedding map, etc.).

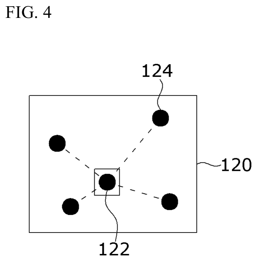

The internal relationship may be generated by a transformer that uses a self-attention between keypoints 122, 124 of a first feature map 120 in each image data, as illustrated in FIG. 4. FIG. 4 shows an example of generation of a descriptor in single image data. Specifically, the internal relationship may be a descriptor describing the relationship between any keypoint 122 and the peripheral keypoint 124 (e.g., spatial proximity, edge continuation, or local pattern similarity, etc.).

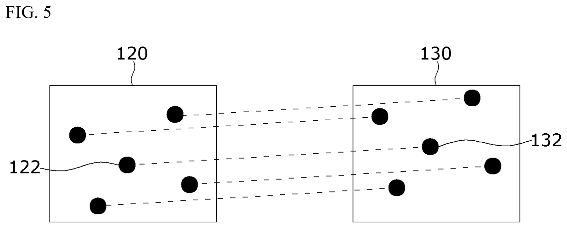

The external relationship may be generated by a transformer using cross-attention between keypoints 122, 132 that match in the first feature maps 120, 130 in the plurality of image data, as illustrated in FIG. 5. FIG. 5 shows an example of generation of a descriptor in a plurality of time-series image data. The processor 110 may perform matching between keypoints 122, 132 based on the vectors of the keypoints 123, 132 (e.g., using cosine similarity, correlation scores, or learned attention weights, etc.). The external relationship may be a descriptor that describes a relationship between keypoints 122 and 132 that match between time-series image data in a matching state.

In the present disclosure, first optical flow data based on the descriptor may be well generated even in a low texture without special features, such as on the ground or road surface of a road environment (e.g., asphalt, concrete, soil, or painted road markings, etc.). In addition, since the self-attention defines the position of the keypoint itself in the corresponding image, repeated patterns between a plurality of image data may also be smoothly matched (e.g., tiled pavement, repeated lane markers, or patterned flooring, etc.).

The processor 110 may generate global coarse matching information based on the descriptor. Specifically, the processor 110 may input the vector map of the descriptor into a differentiable matching layer to generate global coarse matching information. The global coarse matching information may be, for example, a confidence matrix, and the matching of features in the confidence matrix may be selected according to mutual-nearest-neighbor criteria, resulting in a coarse-level matching prediction (e.g., region-level correspondences, approximate optical shifts, or coarse trajectory alignment, etc.). The coarse-level matching prediction may be provided per local area with a window of a certain size in the feature map.

The processor 110 may generate first optical flow data between consecutive image data by performing precision matching between the plurality of image data, based on the global coarse matching information and the second feature of the plurality of the image data (e.g., refined patch-level descriptors, high-resolution feature embeddings, or detail-enhanced feature maps, etc.). For example, the processor 110 may crop each second feature of the image data with a window size of a coarse-level matching prediction provided in the global coarse matching information, and generate first optical flow data between consecutive image data for each cropped second feature with reference to the global coarsen matching information. The first optical flow data may be generated to have position information of a keypoint of each image data and a corresponding keypoint matching pair between a plurality of image data. Here, the first optical flow data may be generated to have a format of an optical flow vector (e.g., 2D pixel displacement, sub-pixel motion vectors, or direction-magnitude vector pairs, etc.). Thereby, the global coarse matching information may be refined and the first optical flow data with sub-pixel level precision matching may be output.

Referring again to S115 of FIG. 2, the processor 110 of the calibration apparatus 100 may extract ground optical flow data located on the ground estimated from the second optical flow data mapped to the three-dimensional space based on the first optical flow data. Here, the ground may be a road surface in a road (e.g., asphalt, concrete, gravel, or a dirt surface, etc.).

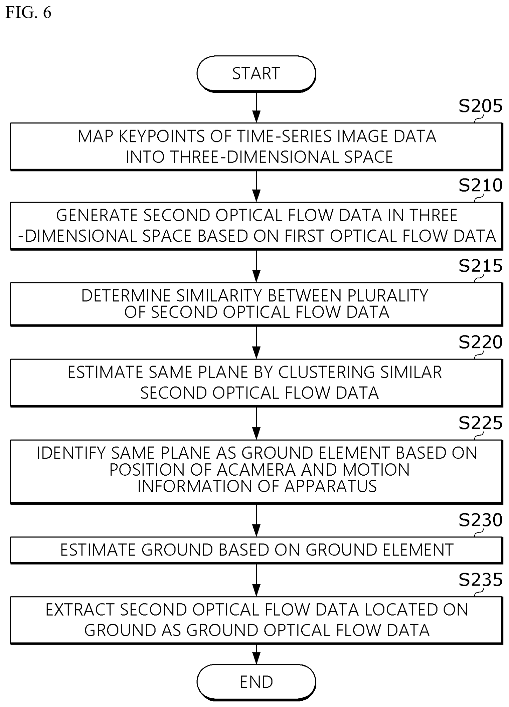

S115 will be described with reference to FIG. 6. FIG. 6 shows an example of generation of ground optical flow data.

Referring to S205 of FIG. 6, the processor 110 may map keypoints of time-series image data into a three-dimensional space. This mapping may be a reconstruction (e.g., triangulation-based reconstruction, depth-from-motion estimation, or multi-view geometric reconstruction, etc.).

Exemplarily describing the reconstruction of a three-dimensional space, matched keypoints in consecutive image data may be mapped to the three-dimensional space using epipolar geometry. The illustrated reconstruction may be, but is not limited to, Structure-from-Motion (SFM). According to an example, the matched keypoints in first optical flow data may be moved to a normalized plane by distortion correction and removal of the internal matrix using an internal geometric parameter (e.g., focal length, principal point, or lens distortion coefficients, etc.). An essential matrix may be estimated based on keypoints matched in the normalized plane. The essential matrix may show an epipolar geometry corresponding to a geometric relationship between two keypoint coordinates in a normalized plane. The three-dimensional space may be derived using the geometric relationship between the two coordinates and triangulation.

Referring to S210 of FIG. 6, the processor 110 may generate second optical flow data in the three-dimensional space based on the location of the keypoint to which the keypoint is mapped in the three-dimension space and the keypoint matching pair information. The second optical flow data may be generated to have a format of an optical flow vector (e.g., 3D displacement vectors, direction-magnitude representations, or 3D point motion fields, etc.).

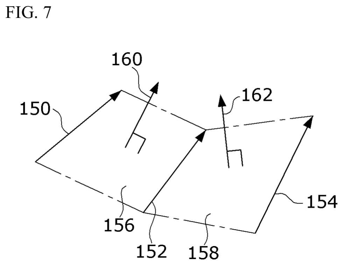

Referring to S215 of FIG. 6, the processor 110 may determine similarity between the plurality of second optical flow data in the three-dimensional space. Specifically, as illustrated in FIG. 7, the processor 110 may determine a similarity between a plurality of second optical flow data 150, 152, 154 based on an angle between normal vectors 160, 162 for each of planes 156, 158 formed by the adjacent second optical flow data150, 152, 154. FIG. 7 shows an example of estimation of the same plane. For example, the closer the cosine similarity between adjacent normal vectors 160, 162 is to 1, the more similar the second optical flow data 150, 152, 154 may be determined to be (e.g., similarity thresholds of 0.95, 0.98, or 0.99, etc.).

Referring to S220 of FIG. 6, the processor 110 may estimate a same plane by clustering similar second optical flow data (e.g., clustering using angular thresholds, cosine-distance metrics, or neighborhood-based grouping, etc.). As illustrated in FIG. 7, the processor 110 may estimate the two planes 156, 158 to be the same plane, based on determining that the two planes 156, 158 are similar.

Referring to S225 of FIG. 6, the processor 110 may identify the same plane as a ground element based on the position of the camera and motion information of an apparatus on which the camera is mounted.

The motion information may include, for example, a motion vector generated from a plurality of image data according to movement of the apparatus, a relative position between the same plane-related element and the motion vector, road surface and continuity information of a prior image frame, and the like (e.g., ego-motion vectors, IMU-based movement estimation, or visual odometry outputs, etc.). The relative position between the same plane and the motion vector, for example, the same plane-related element may include at least one of a same plane, second optical flow data constituting the same plane, or a normal vector (e.g., vertical-plane normals, ground-aligned normals, or forward-facing planar normals, etc.). The relative position may be related to, for example, whether the same plane-related element is located below the motion vector, or whether the same plane-related element is arranged substantially perpendicular to the direction of motion (e.g., motion vector pointing forward while ground-plane normals point upward, etc.). When an element of the same plane is located below the motion vector, or perpendicular to the direction of motion, the same plane may be determined as a ground element.

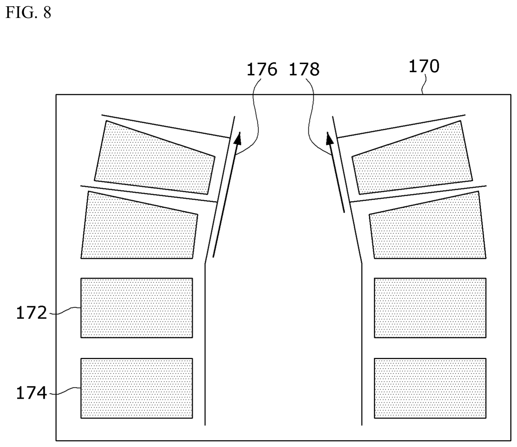

Referring to S230 and S235 of FIG. 6, the processor 110 may estimate the ground based on the identified ground element, and extract second optical flow data located on the estimated ground into the ground optical flow data. The ground optical flow data may have a format of an optical flow vector (e.g., 2D pixel motion vectors, 3D displacement vectors, or direction-magnitude optical-flow pairs, etc.). As illustrated in FIG. 8, the second optical flow data on the estimated ground or road surface may be extracted into ground optical flow data 176, 178. FIG. 8 shows an example of ground optical flow data in a bird's-eye view image.

Referring back to S120 of FIG. 2, the processor 110 may estimate pose information of the camera that minimizes view error in a plurality of ground optical flow data aligned to a view having a predetermined viewpoint based on the image data (e.g., BEV alignment, top-down rectification, or viewpoint-normalization transforms, etc.).

The view at a certain viewpoint may be, for example, but is not limited to, a bird's-eye view. The bird's-eye view may have a point of view in a vertical direction toward the ground or road surface above the vehicle 200, as illustrated in FIG. 8 (e.g., a top-down projection, nadir-view projection, or vertical orthographic view, etc.).

When the attitude of the camera is correct in the bird's eye view, the size or length of the plurality of ground optical flow data 176, 178 in the three-dimensional space may be the same, and the data 176, 178 may be parallel (e.g., their flow vectors point in a consistent direction and magnitude, etc.). When the attitude of the camera is not correct in the bird's-eye view, a view error may occur in the bird's-eye view and the above-described condition may not be satisfied.

The view error may be defined by a magnitude difference between the plurality of ground optical flow data 176, 178 and an angle difference between the plurality thereof (e.g., mismatched lengths, angular deviation, or inconsistent flow directions, etc.). The view error may be referred to as a view deviation in this disclosure. Specifically, the view error may be generated by the sum of the absolute value of the magnitude difference of the ground optical flow vector and α (1-cosine similarity between ground optical flow vectors). The unit of magnitude difference of the ground optical flow vector is a pixel, and α (1-cosine similarity between ground optical flow vectors) may represent a value in the range of 0 to 1 in the null range. The weight α may be determined experimentally (e.g., α=0.3, α=0.5, or α=0.7, etc.). As illustrated in FIG. 8, even if the approximately square-shaped vehicle 172 and the actual straight parking line 174 are distorted in the bird's-eye view 170, when there is no weight α, if the lengths of the ground optical flow vectors 176, 178 constituting the sides of the trapezoid are substantially the same, the view error may be considered to be close to zero.

Minimization of the view error may be performed such that the view error is close to zero. Specifically, the minimization of the view error may be performed such that the plurality of ground optical flow data 176, 178 have the same size and are close to being parallel to each other (e.g., aligned flow directions, uniform magnitudes, or symmetric displacement patterns, etc.).

The processor 110 may search for pose information of the camera that minimizes the view error. The pose information of the camera may be generated to include parameters related to spatial movement and rotation that are applied to the transformation from the image data to a view having a certain viewpoint, such as a bird's eye view (e.g., translation along axes, rotation around yaw-pitch-roll, or combined SE(3) transformations, etc.). Further, the pose information of the camera is generated to include a pose element of the camera, and the pose element may include a yaw, a pitch, and a roll.

According to the present disclosure, a camera may be calibrated without a reference target and independently on the ground. The pose elements of the camera, in particular yaw, pitch and roll, may be estimated independently of the direction of driving of the vehicle and the direction of shooting of the camera, without involving a large amount of data, and depending on the longitudinal motion of the vehicle and on the ground on which it drives (e.g., forward ego-motion, gentle curvature motion, or low-speed creeping motion, etc.). In addition, the behavior of the vehicle may be estimated for every frame of image data of the time-series camera (e.g., frame-by-frame ego-motion, per-frame calibration, or continuous tracking updates, etc.). This may be significant when the vehicle 200 illustrated in FIG. 10 performs calibration of the camera.

Description will be given of the vehicle 200 that generates the camera parameters generated in FIG. 2, specifically, the pose information, or receives the camera pose information from the server 100 (calibration apparatus), and other devices that communicate with the server 100.

FIG. 9 is a diagram illustrating that a vehicle communicates with another device to transmit and receive data.

The vehicle 200 may refer to a device capable of moving to a particular point, as described above. Although the vehicle 200 is described as an example of a vehicle driving on the ground in the present disclosure, the present disclosure may also be applied to a mobility device for flight or water traffic (e.g., a drone, an unmanned aerial vehicle, or an autonomous boat, etc.). As described above with reference to FIG. 1, the vehicle 200 may be autonomously controlled and driven, and autonomous driving may be implemented as semi-autonomous driving or fully autonomous driving (e.g., highway pilot mode, parking assist mode, or full self-driving mode, etc.).

The vehicle 200 may be driven on an electrical energy or fossil energy basis. In the case of electric energy, the vehicle 200 may employ, for example, a pure battery-based vehicle driven only by a high-voltage battery or a gas-based fuel cell as an energy source (e.g., hydrogen fuel cell, methane-based fuel cell, or ammonia-based fuel cell, etc.). Further, the fuel cell may utilize various types of gases capable of generating electrical energy, and the gas may be hydrogen, for example. However, various gases are applicable without being limited thereto. In the case of fossil energy, the vehicle 200 may be driven based on a fuel, such as gasoline, diesel, or liquefied gas, and may be equipped with an engine that drives the wheels included in an actuator 214 by combustion of the fuel. The engine may be included in a power source unit 212 in terms of providing a drive rotational force of the wheel to the actuator 214. Alternatively, the vehicle 200 may be driven in a hybrid manner of electric energy and fossil energy (e.g., plug-in hybrid, mild hybrid, or series hybrid, etc.).

On the other hand, the vehicle 200 may perform communication with other devices 100, 300 or another vehicle 400. Other devices may include, for example, the calibration apparatus 100 that supports various controls, state management, and driving of the vehicle 200, an ITS device 300 for receiving information from an ITS, various types of user devices, and the like (e.g., smartphones, wearable devices, or in-vehicle infotainment units, etc.). As described above with reference to FIG. 1, the calibration apparatus 100 may be, for example, an external device operated by a vehicle manufacturer or operated by a management agency that services autonomous driving.

The ITS device 300 is, for example, a roadside base station (RSU), and the ITS device 300 may interchange vehicle recognition data, driving control and state data, environment data around the vehicle, map data, and the like through V2I with the vehicle 200 to assist the user's driving of the vehicle or support autonomous driving of the vehicle 200 (e.g., traffic signal timing, congestion alerts, or work-zone notifications, etc.). The vehicle 200 may support manual driving or autonomous driving by interchanging the above-listed data through V2V with the other vehicle 400 (e.g., collision warnings, cooperative lane changes, or platooning coordination, etc.).

The vehicle 200 may communicate with other vehicles or other devices based on cellular communication, Wireless Access in Vehicular Environment (WAVE) communication, Dedicated Short Range Communication (DSRC) or near field communication, or other communication schemes (e.g., BLE, UWB, or WiFi-Direct, etc.).

For example, the vehicle 200 may use a communication network such as LTE or 5G, a WiFi communication network, a WAVE communication network, or the like as a cellular communication network for communication with the server 100, the ITS device 300, or the other vehicle 400. As another example, a DSRC or the like used in the vehicle 200 may be used for communication between vehicles. A communication manner between the vehicle 200, the server 100, the ITS device 300, another vehicle 400, and a user device is not limited to the foregoing example.

FIG. 10 shows an example of modules that configure the vehicle.

The vehicle 200 may include a sensor unit 202, an operation unit 204, a display 206, a load device 208, and a communication unit 210.

The sensor unit 202 may include various types of sensors for sensing various states and situations occurring in an external surrounding environment, an internal system, a user operation, and a boarding space of the vehicle 200 (e.g., temperature sensors, cabin-monitoring sensors, or vibration sensors, etc.).

Specifically, the sensor unit 202 may include an externally oriented camera 202a, a radar sensor 202b, and the like to recognize dynamic and static objects existing around the vehicle 200 (e.g., vehicles, pedestrians, cyclists, or road signs, etc.).

The camera 202a may recognize an external object as an image during use of the vehicle 200, generate image data, and transmit the image data to the processor 218. The camera 202a may be mounted on a specific site of the vehicle 200, such as a front site, a rear site, and a side site of the vehicle 200 (e.g., bumper, roof, side-mirror housing, or windshield area, etc.). When a plurality of cameras202a are mounted on each site, it may be referred to as a multi-camera in the present disclosure. The image data acquired by the plurality of camera 202a may be referred to as multi-view image data or multi-view (e.g., front-view, rear-view, side-view, or surround-view images, etc.).

The radar sensor 202b may emit radio waves of a specific frequency around the vehicle 200 to generate radar data through the radio waves reflected from the external object in order to detect the presence and relative distance, speed, direction, and the like of the external object (e.g., approaching vehicles, roadside barriers, or pedestrians, etc.). Although the present disclosure illustrates that a lidar sensor (not shown) is not mounted, in another example, the lidar sensor may be mounted on the vehicle 200 (e.g., a roof-mounted lidar, a bumper-mounted lidar, or a corner-mounted lidar, etc.).

The sensor unit 202 may include an attitude sensor 202c. The attitude sensor 202c may detect, for example, the state of three axes of the vehicle 200, such as yaw, pitch, and roll, and output various pose states of the vehicle based on the factors described above (e.g., tilt angle, angular rate, or acceleration-based rotation estimation, etc.). The attitude sensor may be configured, for example, as an IMU sensor, a gyro sensor, or the like. The processor 218 may generate pose data based on the pose state.

In addition, the sensor unit 202 may include a positioning sensor 202d for confirming the position of the vehicle 200. The positioning sensor 202d is, for example, but not limited to, a GPS sensor or a GNSS sensor (e.g., a satellite-based RTK module, a differential GPS receiver, or a multi-band GNSS module, etc.).

The present disclosure describes the sensors of the sensor unit 202, which are referred to in the description, and may further include sensors that sense various situations not listed therein (e.g., ultrasonic sensors, cabin cameras, or rain/light sensors, etc.).

The operation unit 204 may be configured as a module for a user to steer for driving. For example, the operation unit 204 may be a steering wheel for manual driving, an automatic or manual transmission actuator, an accelerator pedal, a brake pedal, a gear transmission, or the like (e.g., paddle shifters, drive-mode selectors, or electronic shift-by-wire levers, etc.). The operation unit 204 may further include an interface for using, releasing, and selecting a detailed function of the autonomous driving mode requested from the user, so that the user uses the autonomous driving function (e.g., enabling lane-keeping assist, activating highway pilot, or selecting automated parking, etc.).

The display 206 may serve as a user interface. The display 206 may be displayed by the processor 218 to output an operation state of the vehicle 200, a control state, route/traffic information, remaining energy information, content requested by the driver, and the like (e.g., navigation maps, ADAS alerts, or media playback screens, etc.). In addition, the display 206 may be configured as a touch screen on which driver input is detectable to receive a driver's request instructing the processor 218.

The load device 208 is mounted on the vehicle 200 and may be a type of non-driving electric device excluding a driving power system such as a wheel drive unit (not shown). The load device 208 is an auxiliary device that receives power from the power source unit 212, and may be, for example, an air conditioning system, an indicator lamp system, an illumination system, a seat system, and various devices installed in the vehicle 200 (e.g., infotainment units, window actuators, or interior comfort modules, etc.).

The communication unit 210 may support mutual communication with the server 100, the ITS device 300, the surrounding vehicle 400 and the like. The communication unit 210 may include, for example, a module that processes cellular communication, WAVE, DSRC communication, and the like (e.g., 5G-NR modules, V2X modems, or WiFi communication processors, etc.). In the present disclosure, the communication unit 210 may transmit data generated or stored during driving to the server 100 and receive data and a software module transmitted from the server 100. The communication unit 210 may support communication for transmitting or receiving signals related to data, control, commands, and requests between the components of FIG. 10. The components may be instruments or modules referred to as reference numerals 202-218 illustrated in FIG. 10. The communication unit 210 may transmit a signal transmitted between components, that is, a signal related to data, control, command, and request, to a communication bus by using, for example, controller area network (CAN) communication, and transmit the signal to a specific component. Data, controls, commands, and requests conveyed in CAN communication may be referred to as CAN data. The communication unit 210 may support communication with an electronic device carried by a passenger inside the vehicle 200 (e.g., smartphones, tablets, or wearable devices, etc.).

In addition, the vehicle 200 may include the power source unit 212 and the actuator 214.

The power source unit 212 may generate and supply power and electric power to be used for a driving power system and a non-driving power system such as the actuator 214. The non-driving power system may be, for example, and not limited to, the sensor unit 202, the operation unit 204, the display 206, the load device 208, the communication unit 210, and the like, and may include various components that implement sensing, interface, communication, and convenience functions except for components directly involved in driving operations (e.g., HVAC systems, in-cabin electronics, or door/seat control modules, etc.).

The actuator 214 includes at least one module that implements a driving operation and may execute the driving operation based on a user request from the operation unit 204 or a signal according to a request of the processor 218. The signal according to the request may be associated with at least one of a longitudinal control such as acceleration or deceleration, a lateral control such as steering, or a gear shift, for example (e.g., downshifting, upshifting, or switching drive modes, etc.). Here, the gear shift may be processed at the request of a manual driving user using a gear shifter or the processor 218 in autonomous driving.

The actuator 214 may include a wheel drive unit (not shown), and a mechanical component and an electronic module for implementing a driving operation in the wheel drive unit to perform a driving operation according to a command of the processor 218 by a user's manual operation or autonomous driving. When the vehicle 200 is operated on an electrical energy basis, it may include an assembly for transmitting the requested driving motion to the wheel drive unit (e.g., an inverter, motor controller, or reduction gear assembly, etc.).. When the vehicle 200 is operated on a fossil energy basis, the actuator 214 may include a transmission and gear module that transmits the power of the internal combustion engine (e.g., an automatic transmission, dual-clutch transmission, or continuously variable transmission, etc.).

The wheel drive unit may include a plurality of wheels, a driving force generation module for generating a driving force and applying or transmitting the driving force to the wheels, a braking module for decelerating driving of the wheels, and a steering module for realizing lateral control of the wheels (e.g., steer-by-wire modules, electric power steering, or four-wheel steering units, etc.). When the vehicle 200 is driven on an electrical energy basis, the driving force generation module may be configured with a motor assembly that generates a driving force on the basis of power output from an electrical battery (e.g., front motor, rear motor, or dual-motor AWD unit, etc.). The braking module of the electric-based vehicle 200 may further have a regenerative braking function (e.g., mild regeneration, strong regeneration, or driver-selectable regeneration levels, etc.).

In addition, the vehicle 200 may include a memory 216 and the processor 218.

The memory 216 may store applications and various data for control of the vehicle 200 to load the applications or read and write the data at the request of the processor 218. In the present disclosure, the memory 216 may receive and manage the parameters of the camera 202a from the server 100. In addition, the memory 216 may receive and manage information necessary for driving, such as map information, traffic information, weather information, accident information, and the like (e.g., HD maps, road-closure alerts, or real-time congestion data, etc.).

The processor 218 may perform overall control of the vehicle 200. The processor 218 may be configured to execute applications and instructions stored in the memory 216. The processor 218 may perform the calibration method of FIG. 2 to generate parameters, such as pose information, of the camera 202a. In another example, the processor 218 may receive pose information of the camera 202a generated by the server 100. Specifically, the processor 218 may convert the image data acquired from the camera 202a into a view of a predetermined viewpoint based on the pose information and the internal geometric parameter of the camera 202a (e.g., BEV transformation, rectified forward view, or oblique-view projection, etc.). The processor 218 may recognize an object based on a view at a predetermined time point (e.g., vehicles, pedestrians, or road boundaries, etc.). The processor 218 may control driving based on the recognized object. In addition, the processor 218 may perform autonomous driving control based on information estimated from a view at a predetermined point in time, along with various data recognized from the radar sensor 202b, the attitude sensor 202c and the positioning sensor 202d (e.g., lane-keeping control, adaptive cruise control, or collision avoidance control, etc.).

In the present disclosure, the processor 218 may be implemented as a single processing module, as an example. As another example, the processing according to the foregoing may be distributed processing in a plurality of processing modules, and the processor 218 may be collectively referred to as a plurality of the processing modules in this disclosure (e.g., a perception processor, a planning processor, or a control processor, etc.).

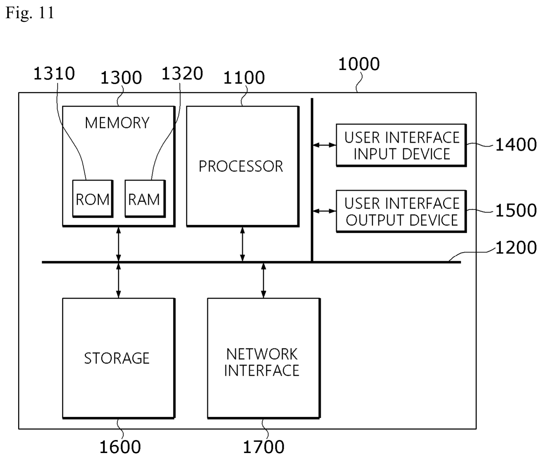

FIG. 11 shows an example computing system (e.g., a computing device of a vehicle or any other apparatus). One or more controllers, processors, etc. described herein, such as one or more components of the vehicle 200, one or more components of the server 100, one or more components of another vehicle 400, and any other components and devices disclosed herein, may be implemented by or in the computing system as shown in FIG. 11.

A computing system 1000 may include at least one processor 1100, memory 1300, a user interface input device 1400, a user interface output device 1500, a storage 1600, and a network interface 1700, which are connected with each other via a bus 1200. The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example example(s) disclosed in the specification may be implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

For example, there is provided a calibration method of a camera, the calibration method comprising: generating first optical flow data between time-series image data according to the movement of the camera; extracting ground optical flow data located on the ground estimated from second optical flow data mapped to the three-dimensional space based on the first optical flow data; and estimating pose information of the camera that minimizes a view error in the plurality of ground optical flow data aligned to a view having a predetermined perspective based on the image data. In some implementations, the first optical flow data, the second optical flow data and the ground optical flow data may have a format of an optical flow vector.

In some implementations, the generating first optical flow data may comprise: extracting a first feature from the plurality of time-series image data, generating a descriptor that describes an internal relationship between keypoints associated with the first feature of each image data and an external relationship of keypoints matched between the plurality of image data, generating global coarse matching information based on the descriptor, and generating the first optical flow data by performing precision matching between the plurality of image data based on the global coarse matching information and a second feature of the plurality of image data that is more precise than the first feature.

In some implementations, the internal relation may be generated by a transformer using self-attention between keypoints of the respective image data, and the external relation may be generated by a transformer using cross-attention between the matching keypoints.

In some implementations, the first optical flow data may be generated to include position information of a keypoint of each image data and keypoint matching pair information on correspondence among the plurality of image data.

In some implementations, the first optical flow data may be generated to include position information of a keypoint of each image data and keypoint matching pair information on correspondence among the plurality of image data, and the second optical flow data may be generated in the three-dimensional space based on the keypoint matching pair information and a position of a keypoint to which the keypoint of the time-series image data is mapped in the three-dimension space.

In some implementations, the extracting ground optical flow data may comprises: determining a similarity between the plurality of second optical flow data, estimating a same plane by clustering similar second optical flow data, determining the same plane as a ground element based on a position of the camera and motion information of a device on which the camera is mounted, and extracting the second optical flow data located on the ground estimated based on the ground element into the ground optical flow data.

In some implementations, the determining a similarity may comprise determining a similarity between the plurality of second optical flow data based on an angle between normal vectors of each plane formed by adjacent second optical flow data.

In some implementations, the view error may be defined by a size difference between the plurality of ground optical flow data and an angular difference between the plurality of ground optical flow data, and the minimization of the view error may be performed so that the plurality of ground optical flow data have the same size and the plurality of ground optical flow data are close to being parallel to each other.

In some implementations, the pose information of the camera may be generated to include parameters related to spatial translation and rotation applied to the transformation into a view having the predetermined perspective of the image data, and the view at the predetermined perspective is provided as a bird's eye view.

For example, there is provided calibration apparatus of a camera, the calibration apparatus comprising: a memory storing at least one instruction; and at least one processor executing the at least one instruction stored in the memory. The at least one processor is configured to: generate first optical flow data between time-series adjacent image data according to the movement of the camera; extract ground optical flow data located on the ground estimated from second optical flow data mapped to the three-dimensional space based on the first optical flow data; and estimate pose information of the camera that minimizes a view error in the plurality of ground optical flow data aligned to a view having a predetermined perspective based on the image data.

For example, it is possible to provide a calibration method and apparatus of a camera that calibrates the camera depending on the ground without a reference target and estimates all the pose elements of the camera without involving a large amount of data.

For example, the pose elements of the camera, specifically yaw, pitch, and roll, may be estimated depending on the longitudinal motion and the driving ground of a vehicle, regardless of the driving direction of the vehicle and a shooting direction of the camera. In addition, the behavior of the vehicle may be estimated for every frame of image data of the time-series camera.

The effects obtainable in the present disclosure are not limited to the effects mentioned above, and other effects not mentioned will be clearly understood by a person skilled in the art from the following description.

While the exemplary methods of the present disclosure described above are represented as a series of operations for clarity of description, it is not intended to limit the order in which the steps are performed, and the steps may be performed simultaneously or in different order as necessary. In order to implement the method, the described steps may further include other steps, may include remaining steps except for some of the steps, or may include other additional steps except for some of the steps.

The various examples of the present disclosure are not a list of all combinations and are intended to describe representative examples of the present disclosure, and the matters described in the various examples may be applied independently or in combination of two or more.

In addition, various examples of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various examples to be executed on an apparatus or a computer, a non-transitory computer-readable medium having such software or commands stored thereon and executable on the apparatus or the computer.

## Claims

1. A method performed by a vehicle, the method comprising:
generating, via a sensor of the vehicle, time-series image data associated with a surrounding environment of the vehicle;
obtaining, via the sensor and based on movement of the sensor, first optical flow data between adjacent image frames of the time-series image data;
mapping the first optical flow data into a three-dimensional space to generate second optical flow data;
extracting, from second optical flow data, ground optical flow data associated with keypoints located on a ground plane;
aligningthe ground optical flow data to a view having a predetermined perspective based on the time-series image data;
determine a view error in the aligned ground optical flow data;
determining pose parameters associated with the sensor that, when applied, the pose parameters reduce the view error,
outputting a signal indicating the pose parameters; and
adjusting, based on the signal, the sensor.

2. The method of claim 1, wherein the first optical flow data, the second optical flow data and the ground optical flow data have a format of an optical flow vector.

3. The method of claim 1 or 2, wherein the obtaining of the first optical flow data comprises:
extracting a first feature from the time-series image data;
generating a descriptor that describes:
an internal relationship between keypoints associated with the first feature, and
an external relationship of keypoints matched between the adjacent image frames of the time-series image data;
generating, based on the descriptor, global coarse matching information;
extracting a second feature from the time-series image data, wherein the second feature has a finer granularity than the first feature;
based on the global coarse matching information and the second feature, performing precision matching between the adjacent image frames of the time-series image data; and
generating, based on the precision matching, the first optical flow data.

4. The method of claim 3, wherein the generating of the descriptor comprises:
applying a transformer-based self-attention process to the keypoints associated with the first feature to generate the internal relationship; and
applying a transformer-based cross-attention process to the keypoints matched between the adjacent image frames of the time-series image data to generate the external relationship.

5. The method of claim 3 or 4, wherein the first optical flow data comprises:
position information of keypoints in each image frame of the time-series image data, and
matching-pair information indicating correspondences between keypoints of the adjacent image frames.

6. An apparatus of a vehicle, the apparatus comprising:
a sensor configured to generate time-series image data associated with a surrounding environment of the vehicle;
a processor; and
a memory storing at least one instruction that, when executed by the processor, is configured to cause the apparatus to:
obtain, via the sensor and based on movement of the sensor, first optical flow data between adjacent image frames of the time-series image data;
map the first optical flow data into a three-dimensional space to generate a plurality of pieces of second optical flow data,
extract, from the plurality of pieces of second optical flow data, ground optical flow data associated with keypoints located on a ground plane; and
align, the ground optical flow data to a view having a predetermined perspective based on the time-series image data,
determine a view error in the aligned ground optical flow data,
determine pose parameters associated with the sensor that, if applied, the pose parameters reduce the view error,

7. The apparatus of claim 6, wherein the first optical flow data, the plurality of pieces of second optical flow data and the ground optical flow data have a format of an optical flow vector.

8. The apparatus of claim 6 or 7, wherein the at least one instruction, when executed by the processor, is configured to cause the apparatus to:
extract a first feature from the time-series image data,
generate a descriptor that describes:
an internal relationship between keypoints associated with the first feature, and
an external relationship of keypoints matched between the adjacent image frames of the time-series image data,
generate, based on the descriptor, global coarse matching information,
extract a second feature from the time-series image data, wherein the second feature has a finer granularity than the first feature,
based on the global coarse matching information and the second feature, perform precision matching between the adjacent image frames of the time-series image data, and
generate, based on the precision matching, the first optical flow data.

9. The apparatus of claim 8, wherein the descriptor is generated by:
applying a transformer-based self-attention process to the keypoints associated with the first feature to generate the internal relationship, and
applying a transformer-based cross-attention process to the keypoints matched between the adjacent image frames of the time-series image data to generate the external relationship.

10. The apparatus of claim 8 or 9, wherein the first optical flow data comprises:
position information of keypoints in each image frame of the time-series image data, and
matching-pair information indicating correspondences between keypoints of the adjacent image frames.

11. The apparatus of any one of claims 6 to 10, wherein the first optical flow data comprises:
position information of keypoints in each image frame of the time-series image data, and
matching-pair information indicating correspondences between keypoints of the adjacent image frames, and
wherein the plurality of pieces of second optical flow data is generated based on the matching-pair information and positions obtained by mapping the keypoints of the time-series image data into the three-dimensional space.

12. The apparatus of any one of claims 6 to 11, wherein the at least one instruction, when executed by the processor, is configured to cause the apparatus to:
determine a similarity between the plurality of pieces of the second optical flow data,
based on a similarity condition between at least two pieces of the second optical flow data being satisfied, cluster the at least two pieces to determine a candidate plane,
based on a position of the sensor and motion information of the vehicle on which the sensor is mounted, identify the candidate plane as the ground plane, and
extract, as the ground optical flow data, pieces of the second optical flow data that are associated with keypoints located on the ground plane.

13. The apparatus of claim 12, wherein the at least one instruction, when executed by the processor, is configured to cause the apparatus to:
determine whether the at least two pieces of the second optical flow data satisfy the similarity condition based on an angle between respective normal vectors of the at least two pieces.

14. The apparatus of any one of claims 6 to 13, wherein the view error is determined based on:
a difference in magnitudes of ground optical flow vectors associated with the aligned ground optical flow data, and
a difference in directions of the ground optical flow vectors, and
wherein the at least one instruction, when executed by the processor, is configured to cause the apparatus to reduce the view error so that the ground optical flow vectors have uniform magnitudes and are parallel to each other.

15. The apparatus of any one of claims 6 to 14, wherein the pose parameters indicate spatial translation and rotation of the sensor for transforming the ground optical flow data into the view having the predetermined perspective, and
wherein the predetermined perspective comprises a bird's eye view perspective.
